# EUROPÄISCHE PATENTSCHRIFT

(11) **EP 2 504 833 B1**
(45) Veröffentlichungstag und Bekanntmachung des Hinweises auf die Patenterteilung: **31.07.2013**
(21) Anmeldenummer: 10790347.8
(22) Anmeldetag: 25.11.2010
(51) Int. Cl.: G10K 15/02

(54) **VERFAHREN ZUR SYNTHETISCHEN ERZEUGUNG EINES MOTORGERÄUSCHES UND VORRICHTUNG ZUR DURCHFÜHRUNG DES VERFAHRENS**
PROCESS FOR PRODUCING A SYNTHETIC MOTOR NOISE AND DEVICE FOR IMPLEMENTING THE SAME
PROCÉDÉ DE PRODUCTION SYNTHÉTIQUE D'UN BRUIT DE MOTEUR ET DISPOSITIF POUR METTRE EN OEUVRE LE PROCÉDÉ

(30) Priorität: 25.11.2009 DE 102009055777
(43) Veröffentlichungstag der Anmeldung: 03.10.2012
(73) Patentinhaber: Audi AG, 85045 Ingolstadt (DE)
(72) Erfinder: VOGEL, Friedemann, 85053 Ingolstadt (DE); HINRICHSEN, Lars, 85051 Ingolstadt (DE)
(74) Vertreter: Geissler, Manfred
(86) Internationale Anmeldenummer: PCT/EP2010/007147
(87) Internationale Veröffentlichungsnummer: WO 2011/063956

(56) Entgegenhaltungen:
- US-A1- 2005 113 168
- US-A1- 2006 177 797

## Beschreibung

Die Erfindung betrifft ein Verfahren zur synthetischen Erzeugung eines Motorgeräusches, insbesondere einer Brennkraftmaschine nach dem Oberbegriff des Anspruchs 1.

Es sind bereits mehrere Verfahren zur Erzeugung synthetischer Motorgeräusche allgemein bekannt, mit denen insbesondere ein vorhandenes Motorgeräusch eines Kraftfahrzeugs so ergänzt wird, dass ein ansprechender Motorsound insgesamt erzeugt wird. Dazu werden elektrische Wandlererregersignale als Signalwerte erzeugt, die wenigstens einem installierten elektromechanischen Wandler, insbesondere einem Aktor oder Lautsprecher zugeführt werden.

Bei einem solchen Verfahren (DE 690 23 133 T3) wird ein vorhandenes Motorgeräusch durch ein erzeugtes Zusatzgeräusch zu einem ansprechenden Motorsound im Innenraum ergänzt. Dazu wird der Motorzustand und sein aktuelles Motorgeräusch über ein Mikrofon und/oder einen Vibrationssensor am Motor sowie über ein,Lastsignal ermittelt. Dem ermittelten Motorzustand entsprechende Fahrzeugbetriebsgeräusche, beispielsweise ein Sportsound, werden aus einem Tonspeicher ausgelesen und über Lautsprecher oder elektrodynamische Aktoren zusätzlich zum aktuellen Motorgeräusch im Fahrzeuginnenraum hörbar gemacht. Die für die Auslesung des Tonspeichers erforderlichen Sensorsignale sind komplex und für die Ansteuerung des Tonspeichers nicht ohne weiteres verwendbar.

Weiter ist ein Verfahren zur Ergänzung eines Motorgeräusches eines Kraftfahrzeugs bekannt (DE 10 2005 012 463 B3), bei dem in einem Datenspeicher eines Steuergeräts in einem Kennfeld an Drehzahlstützstellen Pegelwerte gespeichert sind, die jeweils einer definierten Motordrehzahl und deren zugeordneten Schwingungen mit Ordnungen als Vielfache der halben Motordrehzahl entsprechen. Bei einer bestimmten Motordrehzahl werden dieser zugeordnete Pegelwerte mehrerer Ordnungen ausgelesen und einer Rechnereinheit des Steuergeräts zugeführt, wo ein kontinuierliches Zeitsignal in der Art einer harmonischen Reihe als Aktorerregersignal berechnet wird. Dieses Verfahren basiert somit auf einem harmonischen Ansatz, wobei mehrere Harmonische überlagert werden, wobei zu jedem harmonischen Anteil ein Pegelverlauf über der Drehzahl existiert. Ein solches Überlagerungsverfahren ist nur mit hohem Aufwand für die Kreation eines gewünschten synthetischen Motorgeräusches einsetzbar.

Ein weiter bekanntes Verfahren (DE 10 2007 055 477 A1) befasst sich mit der Erstellung von Signalsamples mit bestimmten Segmentlängen. Innerhalb der Segmentlängen werden unterschiedliche Segmentabschnitte verwendet, mit denen als Stellparameter gezielt Geräuschmerkmale eingestellt werden können in Verbindung mit der Möglichkeit gut proportioniert höher harmonische Anteile dazuzukomponieren. Es handelt sich somit hier um ein Verfahren zur Komposition von Soundentwürfen. Für eine Anpassung an eine aktuelle Motordrehzahl werden solche kreierten Signalsamples wiederholt und bei höheren Drehzahlen gestaucht bzw. bei kleineren Drehzahlen entsprechend gestreckt. Eine solche Drehzahlanpassung ist aufwändig und zudem sind die Möglichkeiten mit überschaubaren Datenmengen unterschiedliche Sounds zu erzeugend beschränkt.

Aus der US 2006/177797 A1 ist ein gattungsgemäßes Verfahren zur synthetischen Erzeugung eines Motorgeräusches bekannt. In dem Verfahren wird zumindest ein Signalsample digital in einer Datenreihe gespeichert. Bei dem Signalsamples ist somit der Pegelverlauf nicht als kontinuierliche Kurve, sondern durch einzelne Funktionswerte wiedergegeben, die durch Schrittweiten voneinander beabstandet sind und in einer Abfolge hintereinander angeordnet sind. Aus der US 2005/113168 A1 ist ebenfalls ein Verfahren zur synthetischen Erzeugung eines Motorgeräusches bekannt, bei dem in einem Datenspeicher eine Vielzahl von Signalsamples gespeichert werden. Jedes dieser Signalsamples ist jeweils einem speziellen Betriebszustand zugeordnet.

Aufgabe der Erfindung ist es demgegenüber ein Verfahren zur synthetischen Erzeugung von Motorgeräuschen vorzuschlagen, bei dem mit einem Minimum an Daten bei hoher Übersichtlichkeit eine Vielzahl verschiedener Motorgeräusche erzeugt werden kann.

Die Aufgabe ist durch die Merkmale des Patenanspruches 1 gelöst. Bevorzugte Weiterbildungen der Erfindung sind in den abhängigen Ansprüchen offenbart.

In dem Verfahren wird in einem Datenspeicher wenigstens ein Signalsample mit Funktionswerten als digitale Datenreihe abgelegt, dergestalt dass an aufeinander in Schrittweiten folgenden Signalsample-Stützstellen Funktionswerte abrufbar gespeichert sind. In Abhängigkeit von erfassten und/oder vorgebbaren Führungsgrößen als Betriebsparameter des Motors und gegebenenfalls eines durch den Motor angetriebenen Fahrzeugs werden Funktionswerte aus der Datenreihe drehzahlangepasst abgerufen und pegelangepasst zu Signalwerten in einer Recheneinheit verrechnet sowie unmittelbar oder mittelbar über eine weitere Verstärkung dem wenigstens einen Wandler als Wandlererregersignale zugeführt.

Vorteilhaft können durch drehzahlangepasste Schrittweitenänderungen in Verbindung mit den Führungsgrößen zugeordneten Pegelanpassungen gegebenenfalls mit Kombinationen mehrerer Signalsamples eine Vielzahl unterschiedlicher Sounds zur Verfügung gestellt werden, wobei jeweils auf die gleiche im Datenspeicher abgelegte relativ kleine erforderliche Datenmenge zurückgegriffen wird. Somit lassen sich vorteilhaft mit gleichen Steuergeräten mit gleichen Datenspeichern und gleichen Daten geeignete Zusatzsounds für verschiedene Fahrzeuge nur durch unterschiedliche Ansteuerungen erzeugen. Zudem können auch vorteilhaft zur Variation eines Motorsounds desselben Fahrzeugs unterschiedliche Zusatzmotorgeräusche erzeugt und dem originalen Motorgeräusch beigefügt werden.

Erfindungsgemäß weist ein Signalsample eine vorbestimmte Länge mit einer Zuordnung zu einem Motordrehwinkel auf, wobei insbesondere eine Signalsamplelänge zwei Motorumdrehungen einer Brennkraftmaschine entsprechend einem Kurbelwinkel von 720° zugeordnet ist. Nach dem Durchlaufen dieses Kurbelwellenwinkels von 720° wird jeweils das Signalsample wiederholt ausgelesen.

Dabei sind die Schrittweiten zwischen den Signalsample-Stützstellen Motordrehwinkelschritten zugeordnet, wobei die Schrittweiten gleich sein können und dann gleichen Motordrehwinkelschritten entsprechen. Alternativ können unterschiedliche Schrittweiten fest vorgegeben sein oder über vorgebbare Funktionen die Schrittweiten entsprechend unterschiedlich veränderbar festgelegt werden. Mit diesen Schrittweiten-Variationen kann die Signalabtastung optimiert werden.

Allgemein wird zweckmäßig anhand einer zeitabhängigen Größe und wenigstens einer Führungsgröße der jeweils nächste Funktionswert aus der Datenreihe des Signaltamples abgerufen. Vorzugsweise wird dazu für eine jeweils aktuelle Drehzahlanpassung der abgerufenen Funktionswerte die aktuelle Motordrehzahl als Führungsgröße der Recheneinheit eingegeben und dort in Verbindung mit einer Taktzeit als zeitabhängiger Größe ein jeweils zugeordneter aktueller nächster Motordrehwinkelschritt als nächste drehzahlabhängige Schrittweite zur Auslesung des dortigen nächsten an einer Signalsample-Stützstelle gespeicherten Funktionswerts ermittelt.

Die Drehzahlanpassung erfolgt somit hier durch Berechnung der jeweils nächsten Schrittweite aus der aktuellen Drehzahl, so dass es nicht wie im Stand der Technik erforderlich ist, aufwendig Signalketten entsprechend der aktuellen Drehzahl zu stauchen oder zu strecken.

Vorteilhaft können im Datenspeicher zudem an Pegelwert-Stützstellen, jeweils Pegelverlaufswerte zugeordnet zu Führungsgrößen abrufbar gespeichert sein, wobei die Stützstellen der Pegelwerte in Definition zu einer Drehzahl, Last oder Geschwindigkeit oder allgemein als Prozent von einer Führungsgröße abgelegt sind. Ausgelesene Funktionswerte eines Signalsamples können dann als Basispegelwerte für ihre aktuellen gewünschten Pegel auf Signalwerte an die Führungsgrößen angepasst werden. Eine einfache Anpassung ist dadurch möglich, dass die Funktionswerte als Basispegelwerte mit den Pegelverlaufswerten multipliziert werden. Damit steht eine sehr große Variationsmöglichkeit zur Erzeugung von Motorsounds zur Verfügung. Als Führungsgrößen für die Pegelanpassung werden dabei die wesentlichen Betriebsparameter einzeln oder in Kombination verwendet, insbesondere die Drehzahl, die Last und gegebenenfalls in Verbindung mit einem Fahrzeug die Fahrpedalstellung, die Geschwindigkeit und die Fahrzeit.

Eine weitere Maßnahme, den erzeugten Motorsound mit geringem Aufwand zu variieren, besteht darin, dass die ermittelten drehzahlabhängigen Schrittweiten sowie Pegelverlaufswerte mit Multiplikatoren beaufschlagt werden. Beispielsweise können durch Verwendung von Multiplikatoren entsprechend größere oder kleinere Schrittweiten für die Abtastung der Funktionswerte eines Signalsamples generiert werden. Damit können Signalsamples in definierten Frequenzverhältnissen zur Motordrehzahl abgetastet werden, beziehungsweise in definierten Frequenzverhältnissen zueinander überlagert werden.

Zudem können Matrizen abgelegt werden, die eine Zuordnung von abgelegten Signalsamples, Pegelverläufen der Führungsgrößen und gegebenenfalls von Multiplikatoren für Schrittweiten und/oder Pegel zu je einem Sound eines Motorgeräusches ermöglichen, wobei zunächst eine Trennung zwischen dem Datenpool und einem indexierten Zugriff existiert, womit weitere Maßnahmen für Variationen und Kombinationen zur Verfügung stehen. Ebenfalls können für die Erzeugung einer Vielzahl unterschiedlicher Sounds weitere Matrixfelder hinzugefügt werden, die über eine externe Adressierung aktivierbar sind, wobei unterschiedliche Sounds mit verschiedenen Soundspuren zusammensetzbar, einzeln auswählbar und auch kombinierbar sind. Es wird nochmals herausgestellt, dass auch bei einer solchen Variationsvielfalt jeweils nur auf die etwa gleiche Datenmenge zurückgegriffen wird.

Weiter wird eine Vorrichtung zur Durchführung jeweils eines der vorstehenden Verfahren beansprucht.

Anhand einer Zeichnung wird die Erfindung weiter erläutert.

Es zeigen:
- Fig. 1: ein schematisches Blockschaltbild einer Vorrichtung für Wandlererregersignale zum Betrieb eines Aktors zur Erzeugung von Motorgeräuschen;
- Fig. 2: ein Signalsample;
- Fig. 3: Pegelverläufe über der Drehzahl;
- Fig. 4: Pegelverläufe über der Last;
- Fig. 5: einen Pegelverlauf über die Geschwindigkeit; und
- Fig. 6: Indexdaten für einen Sound 1.

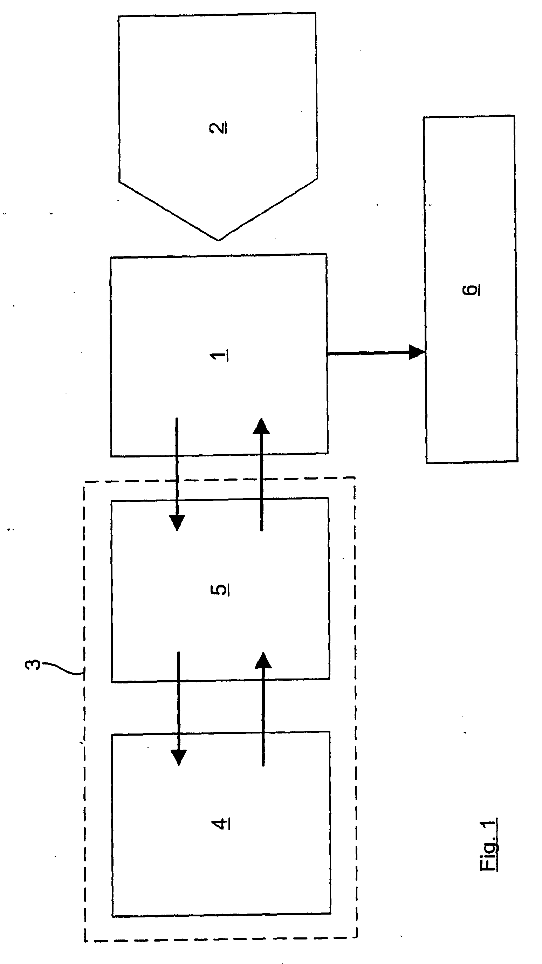

Im Blockschaltbild der Fig. 1 ist ein Rechner 1 dargestellt, dem an einer Eingabeeinheit 2 als Eingangsgrößen aktuell erfasste Führungsgrößen, insbesondere die Betriebsparameter Motordrehzahl, Last und Geschwindigkeit, sowie vorgebbare Größen, wie eine Soundauswahl, etc. zugeführt werden. Dem Rechner ist ein Datenspeicher 3 zugeordnet mit einem Datenpool 4, in dem Signalsamples, beispielsweise vier Signalsamples A, B, C, D sowie Pegelverläufe beispielsweise Pegelverläufe F, G über der Drehzahl, Pegelverläufe H, K über der Last und ein Pegelverlauf M über der Geschwindigkeit abgelegt sind. In einem Index-Datenfeld 5 sind Datenkombinationen definiert, wobei die Adressierungen von Signalsamples und Pegelverläufen abgelegt sind.

Der Rechner 1 führt unter Berücksichtigung der aktuellen Drehzahl über errechnete Schrittweiten eine Drehzahlanpassung für einen oder kombinierte Sounds aus zusammen mit einer Pegelanpassung aus und gibt mit einer Ausgabeeinheit 6 gegebenenfalls über eine weitere Verstärkereinheit ein Wandlererregersignal aus, welches zur Erzeugung eines Motorgeräusches einem Aktor und/oder Lautsprecher zuführbar ist.

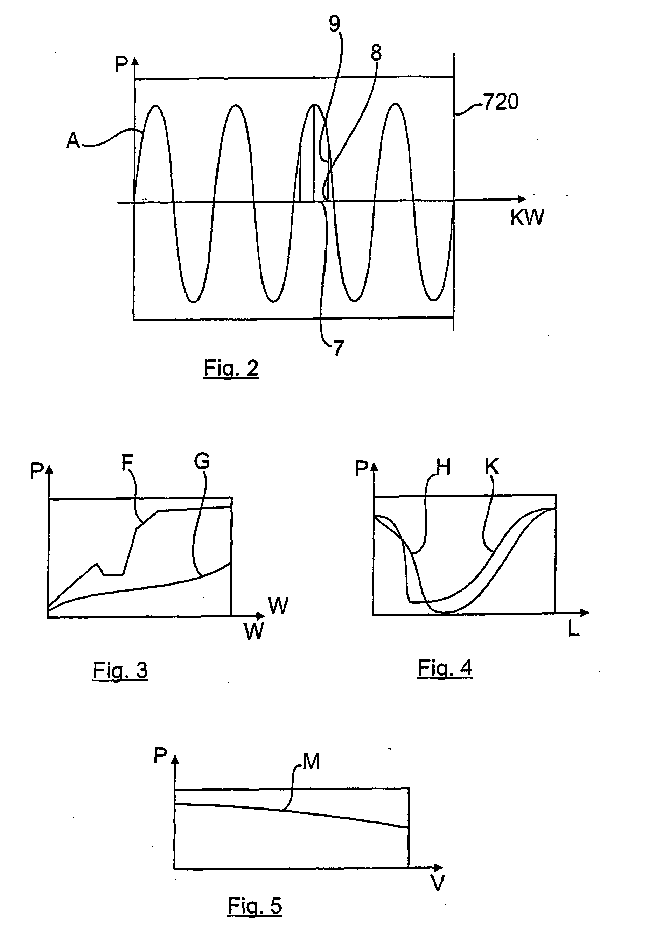

In Fig. 2 ist schematisch und beispielhaft ein im Datenpool 4 abgelegtes Signalsample A mit einer Umhüllungskurve als Sinusfunktion mit vier Sinusbögen gezeigt, die einer Signalsamplelänge für zwei Motorumdrehungen einer Brennkraftmaschine mit einem Kurbelwinkel von 720° entsprechen. Im Datenpool ist jedoch die Sinusfunktion nicht als kontinuierlicher Kurvenverlauf abgelegt sondern als digitale Datenreihe mit in Schrittweiten 7 an Signal-sample-Stützstellen 8 abgelegten Funktionswerten. Wegen der Übersichtlichkeit sind hier nur wenige weit auseinanderliegende Stützstellen 8 eingezeichnet. Konkret sind beispielsweise Motordrehwinkel-Schrittweiten von ca. 2° bis 5° geeignet. Im Datenpool 4 können beispielsweise die weiteren Signalsamples B, C und D in ähnlicher Weise jedoch mit unterschiedlichen Signalwerten abgelegt sein.

In Fig. 3 sind Pegelverläufe F, G über der Drehzahl Ω (Omega) in Fig. 4 Pegelverläufe H, K über der Last L und in Fig. 5 ein Pegelverlauf M über der Geschwindigkeit V dargestellt, die ebenfalls im Datenpool abgelegt sind.

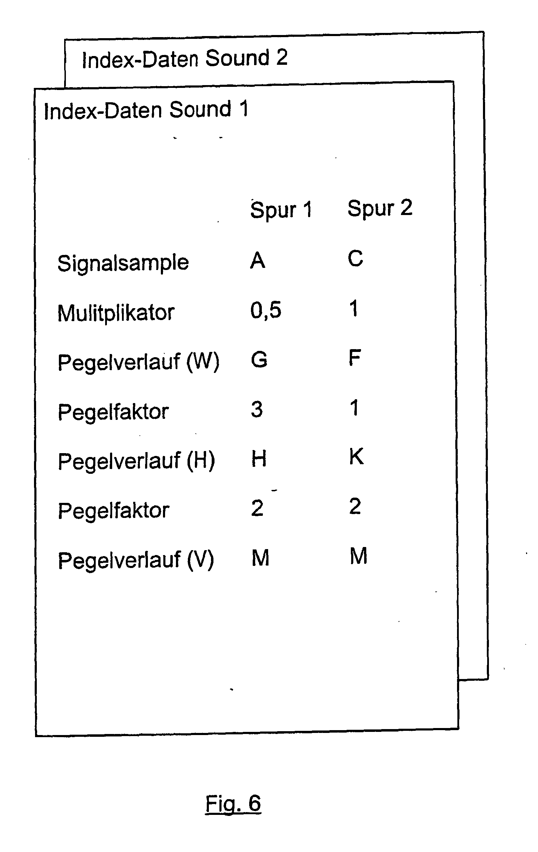

In Fig. 6 ist beispielhaft dargestellt, wie ein Motorsound mit den zur Verfügung stehenden Mitteln kreiert wird: Der Sound 1 wird anhand der angegebenen Tabelle gebildet, wobei in den Zeilen die Soundspuren enthalten sind und in den Spalten die Adressen eingetragen werden. Die angegebene Spur 1 wird gebildet aus dem Signalsample A, welches mit der ermittelten Schrittweite mal dem Multiplikator 0,5 abgetastet wird. Dazu gehört der Pegelverlauf G über die Drehzahl mit einem Pegelfaktor als Multiplikationsfaktor. Zudem wird der Pegelverlauf H über die Last mit einem zugeordneten Pegelfaktor 2 ausgewählt und der Pegelverlauf M über die Geschwindigkeit senkt die Pegel entsprechend ab. Analog kann nun die Spur 2 mit einem (nicht dargestellten) Signalsample C und den weiter angegebenen Bewertungen ausgelesen werden, wobei sich beide Spuren überlagern.

Optional kann nur ein Sound 2 mit den gleichen Datensätzen definiert werden, der sich dann gegebenenfalls aus fünf Spuren zusammensetzt und dazu andere oder gleiche Signalsamples oder Pegelverläufe ausgewählt werden.

## Patentansprüche

1. Verfahren zur synthetischen Erzeugung eines Motorgeräusches, insbesondere einer Brennkraftmaschine, wobei das Motorgeräusch durch wenigstens einen elektromechanischen Wandler, insbesondere einen Aktor oder Lautsprecher, mittels eines Signalwerts entsprechend einem elektrischen Wandlererregersignal erzeugt wird, **dadurch gekennzeichnet, dass** in einem Datenspeicher (3) wenigstens ein Signalsample (A) einer vorbestimmten Länge mit einer Zuordnung zu einem Motordrehwinkel abgelegt ist, welches Signalsample (A) mit Funktionswerten (9) als digitale Datenreihe abgelegt ist, dergestalt, dass an aufeinander in Schrittweiten (7) folgenden Signalsample-Stützstellen (8) Funktionswerte (9) abrufbar gespeichert sind, wobei jeder der, das Signalsample (A) wiedergebenden Funktionswerte (9) als ein Basispegelwert in einer Recheneinheit (1) in Abhängigkeit von erfassten und/oder vorgebbaren Führungsgrößen als Betriebsparameter des Motors und gegebenenfalls eines durch den Motor angetriebenen Fahrzeugs drehzahlangepasst abgerufen wird und der abgerufene Basispegelwert pegelangepasst zu einem Signalwert verrechnet wird, der unmittelbar oder mittelbar dem wenigstens einen Wandler als Wandlererregersignal zugeführt wird, und wobei für eine jeweils aktuelle Drehzahlanpassung der abgerufenen Funktionswerte (9) die aktuelle Motordrehzahl als Führungsgröße in die Recheneinheit (1) eingegeben und dort in Verbindung mit einer Taktzeit als zeitabhängiger Größe ein jeweils zugeordneter aktueller nächster Motordrehwinkelschritt als nächste drehzahlabhängige Schrittweite (7) zur Auslesung des dortigen nächsten an einer Signalsample-Stützstelle (8) gespeicherten Funktionswerts (9) ermittelt wird.

2. Verfahren nach Anspruch 1, **dadurch gekennzeichnet, dass** eine Signalsamplelänge zwei Motorumdrehungen einer Brennkraftmaschine entsprechend einem Kurbelwinkel von 720° zugeordnet ist.

3. Verfahren nach einem der Ansprüche 1 oder 2, **dadurch gekennzeichnet, dass** die Schrittweiten (7) Motordrehwinkelschritten zugeordnet sind und zwischen den Signalsample-Stützstellen (8) gleich sind und damit gleichen Motordrehwinkelschritten entsprechen oder unterschiedliche Schrittweiten (7) fest vorgegeben oder durch vorgebbare Funktionen die Schrittweiten (7) entsprechend unterschiedlich veränderbar festlegbar sind.

4. Verfahren nach einem der Ansprüche 1 bis 3, **dadurch gekennzeichnet, dass** in der Recheneinheit (1) anhand einer zeitabhängigen Größe und wenigstens einer Führungsgröße der jeweils nächste Funktionswert (9) aus der Datenreihe des Signalsamples (A) abgerufen wird.

5. Verfahren nach Anspruch 4, **dadurch gekennzeichnet, dass** für eine jeweils aktuelle Drehzahlanpassung der abgerufenen Funktionswerte (9) die aktuelle Motordrehzahl als Führungsgröße der Recheneinheit (1) eingegeben wird und dort in Verbindung mit einer Taktzeit als zeitabhängiger Größe ein jeweils zugeordneter aktueller nächster Motordrehwinkelschritt als nächste drehzahlabhängige Schrittweite (7) zur Auslesung des dortigen nächsten, an einer Signalsample-Stützstelle (8) gespeicherten Funktionswerts (9) ermittelt wird.

6. Verfahren nach einem der Ansprüche 1 bis 5, **dadurch gekennzeichnet, dass** im Datenspeicher (3) zudem an Pegelwert-Stützstellen, jeweils Pegelverlaufswerte (F, G, H, K, M) zugeordnet zu Führungsgrößen abrufbar gespeichert sind und ausgelesene Funktionswerte (9) als Basispegelwerte für ihre aktuellen Pegel als Signalwerte an die Führungsgrößen angepasst, insbesondere mit den Pegelverlaufswerten (F, G, H, K, M) multipliziert, werden.

7. Verfahren nach Anspruch 6, **dadurch gekennzeichnet, dass** als Führungsgrößen für die Pegelanpassung die Drehzahl und/oder die Last und/oder bei einem Fahrzeug eine Fahrpedalstellung und/oder eine Geschwindigkeit und/oder eine Fahrzeuggröße verwendet werden.

8. Verfahren nach einem der Ansprüche 1 bis 7, **dadurch gekennzeichnet, dass** zudem die ermittelten drehzahlabhängigen Schrittweiten (7) sowie Pegelverlaufswerte (F, G, H, K, M) mit Multiplikatoren beaufschlagbar sind.

9. Verfahren nach einem der Ansprüche 1 bis 7, **dadurch gekennzeichnet, dass** zudem Matrizen abgelegt sind, die eine Zuordnung von abgelegten Signalsamples (A), Pegelverläufen (F, G, H, K, M) der Führungsgrößen und gegebenenfalls von Multiplikatoren für Schrittweiten (7) und/oder Pegel zu je einem Sound eines Motorgeräusches ermöglichen, wobei zunächst eine Trennung zwischen dem Datenpool (4) und einem indexierten Zugriff (5) existiert.

10. Verfahren nach Anspruch 9, **dadurch gekennzeichnet, dass** für die Erzeugung einer Vielzahl unterschiedlicher Sounds weitere Matrixfelder hinzugefügt sind, die über eine externe Adressierung aktivierbar sind, wobei unterschiedliche Sounds einzeln auswählbar oder kombinierbar sind.

## Claims

1. Method for synthesising an engine noise, in particular of an internal combustion engine, the engine noise being generated by at least one electromechanical transducer, in particular an actuator or a loudspeaker, by means of a signal value corresponding to an electrical transducer excitation signal, **characterised in that** at least one signal sample (A) having a predetermined length and being associated with an engine rotational angle is stored in a data store (3), which signal sample (A) is stored with function values (9) as a digital data series in such a way that function values (9) are retrievably stored at signal-sample support points (8) which succeed one another in step sizes (7), each of the function values (9) representing the signal sample (A) being retrieved in a rotational-speed-adjusted manner as a base level value in a computing unit (1) according to detected and/or predefinable reference variables as operating parameters of the engine and optionally of a vehicle driven by the engine and the retrieved base level value being offset in a level-adjusted manner with respect to a signal value which is directly or indirectly transmitted to the at least one transducer as a transducer excitation signal, and, for a current rotational-speed adjustment of the retrieved function values (9), the current engine speed being input as a reference variable into the computing unit (1) and there, in conjunction with a clock interval as a time-dependent variable, an associated current subsequent engine-rotational-angle step being established as a subsequent rotational-speed-dependent step size (7) for reading out the local subsequent function value (9) stored at a signal-sample support point (8).

2. Method according to claim 1, **characterised in that** a signal sample length is associated with two engine revolutions of an internal combustion engine which correspond to a crank angle of 720°.

3. Method according to either claim 1 or claim 2, **characterised in that** the step sizes (7) are associated with engine-rotational-angle steps and are identical between the signal-sample support points (8) and thus correspond to identical engine-rotational-angle steps or fixedly predefine different step sizes (7) or are differently changeably determinable using predefinable functions corresponding to the step sizes (7).

4. Method according to any of claims 1 to 3, **characterised in that**, in the computing unit (1), the subsequent function value (9) is retrieved from the data series of the signal sample (A) on the basis of a time-dependent variable and at least one reference variable.

5. Method according to claim 4, **characterised in that**, for a current rotational-speed adjustment of the retrieved function value (9), the current engine speed is input as a reference variable to the computing unit (1) and there, in conjunction with a clock interval as a time-dependent variable, an associated current subsequent engine-rotational-angle step is established as a subsequent rotational-speed-dependent step size (7) for reading out the local subsequent function value (9) stored at a signal-sample support point (8).

6. Method according to any of claims 1 to 5, **characterised in that**, in the data store (3), level curve values (F, G, H, K, M) associated with reference values are additionally retrievably stored at level-value support points and readout function values (9), as base level values for their actual level as signal values, are adjusted to the reference variables, in particular multiplied with the level curve values (F, G, H, K, M).

7. Method according to claim 6, **characterised in that** the rotational speed and/or the load and/or an accelerator pedal in a vehicle and/or a velocity and/or a vehicle variable are used as reference variables for the level adjustment.

8. Method according to any of claims 1 to 7, **characterised in that** multipliers can be applied both to the established rotational-speed-dependent step sizes (7) and to level curve values (F, G, H, K, M).

9. Method according to any of claims 1 to 7, **characterised in that** matrices are also stored which allow stored signal samples (A), level curves (F, G, H, K, M) of the reference variables and optionally of multipliers for step sizes (7) and/or levels to each be associated with an engine noise sound, a separation initially existing between the data pool (4) and an indexed access (5).

10. Method according to claim 9, **characterised in that** further matrix fields are added for the generation of a plurality of different sounds and can be activated by means of an external addressing, it being possible to individually select or combine different sounds.

## Revendications

1. Procédé de production synthétique d'un bruit de moteur, en particulier d'un moteur à combustion interne, dans lequel le bruit de moteur est produit par au moins un transducteur électromécanique, en particulier un actionneur ou un haut-parleur, au moyen d'une valeur de signalisation correspondant à un signal électrique d'excitation du transducteur, **caractérisé en ce que** l'on stocke dans une mémoire de données (3) au moins un échantillon de signal (A) d'une longueur prédéterminée en coordination avec un angle de rotation du moteur, lequel échantillon de signal (A) est stocké avec des valeurs fonctionnelles (9) sous la forme d'une séquence de données numériques telle que des valeurs fonctionnelles (9) soient mémorisées pour pouvoir être appelées en des points d'appui de l'échantillon de signal se suivant l'un l'autre par incréments (7), dans lequel chacune des valeurs fonctionnelles (9) reproduisant l'échantillon de signal (A) est appelée en fonction de la vitesse de rotation comme valeur de seuil de base dans une unité de calcul (1) selon des grandeurs de guidage établies et/ou prédéterminables comme paramètres de fonctionnement du moteur et éventuellement d'un véhicule entraîné par le moteur et la valeur de seuil de base appelée est convertie en fonction du seuil en une valeur de signalisation, qui est acheminée directement ou indirectement au au moins un transducteur comme signal d'excitation du transducteur, et dans lequel, pour assurer une adaptation à la vitesse de rotation respectivement courante des valeurs fonctionnelles appelées (9), la vitesse de rotation courante du moteur est introduite comme grandeur de guidage dans l'unité de calcul (1) et on y établit, en liaison avec un temps de cycle comme grandeur fonction du temps, un incrément angulaire de rotation du moteur courant le plus proche respectivement affecté comme incrément (7) le plus proche en fonction de la vitesse de rotation pour y lire la valeur fonctionnelle (9) la plus proche mémorisée en un point d'appui de l'échantillon de signal (8).

2. Procédé selon la revendication 1, **caractérisé en ce qu'**une longueur d'échantillon de signal est affectée à deux rotations d'un moteur à combustion interne en fonction d'un angle de manivelle de 720 °.

3. Procédé selon l'une quelconque des revendications 1 ou 2, **caractérisé en ce que** les incréments (7) sont affectés à des incréments d'angle de rotation du moteur et sont égaux entre les points d'appui (8) de l'échantillon de signal et correspondent donc aux mêmes incréments de l'angle de rotation du moteur ou des incréments différents (7) sont prévus couramment ou encore des incréments (7) peuvent être établis de manière différente en correspondance par des fonctions prédéterminables.

4. Procédé selon l'une quelconque des revendications 1 à 3, **caractérisé en ce qu'**on fait appel dans l'unité de calcul (1) sur la base d'une grandeur fonction du temps et d'au moins une grandeur de guidage à la valeur fonctionnelle (9) respectivement la plus proche de la séquence de données de l'échantillon de signal (A).

5. Procédé selon la revendication 4, **caractérisé en ce que**, pour assurer une adaptation à la vitesse de rotation respectivement courante des valeurs fonctionnelles appelées (9), la vitesse de rotation courante du moteur est introduite comme grandeur de guidage dans l'unité de calcul (1) et, en liaison avec un temps de cycle comme grandeur fonction du temps, on y détermine un incrément de l'angle de rotation du moteur courant le plus proche respectivement affecté comme incrément (7) le plus proche en fonction de la vitesse de rotation pour lire la valeur fonctionnelle (9) mémorisée en un point d'appui (8) de l'échantillon de signal qui y est la plus proche.

6. Procédé selon l'une quelconque des revendications 1 à 5, **caractérisé en ce que**, dans la mémoire de données (3), on mémorise en faisant appel en outre à des points d'appui de la valeur de seuil respectivement des valeurs de courbes de seuil (F, G, H, K, M) qui sont affectées à des grandeurs de guidage et des valeurs fonctionnelles (9) lues sont adaptées comme valeurs de seuil de base pour leur seuil réel comme valeurs de signalisation aux grandeurs de guidage, en particulier sont multipliées avec les valeurs des courbes de seuil (F, G, H, K, M).

7. Procédé selon la revendication 6, **caractérisé en ce que** l'on utilise comme grandeurs de guidage pour l'adaptation du seuil la vitesse de rotation et/ou la charge et/ou, dans un véhicule, une position de la pédale d'accélération et/ou une vitesse et/ou une grandeur du véhicule.

8. Procédé selon l'une quelconque des revendications 1 à 7, **caractérisé en ce que** l'on peut solliciter en outre les incréments (7) obtenus en fonction de la vitesse de rotation ainsi que les valeurs de la courbe de seuil (F, G, H, K, M) avec des multiplicateurs.

9. Procédé selon l'une quelconque des revendications 1 à 7, **caractérisé en ce que** l'on mémorise en outre des matrices, qui permettent une affectation d'échantillons de signal stockés (A), de courbes de seuil (F, G, H, K, M) des grandeurs de guidage et éventuellement de multiplicateurs pour des incréments (7) et/ou des seuils à respectivement un son d'un bruit de moteur, au moins une séparation existant entre le jeu de données (4) et un accès indexé (5).

10. Procédé selon la revendication 9, **caractérisé en ce que**, pour la production d'une pluralité de sons différents, on ajoute d'autres champs de matrices qui peuvent être activés via un adressage externe, des sons différents pouvant être choisis individuellement ou combinés.
